# EUROPÄISCHE PATENTSCHRIFT

(11) **EP 2 528 676 B1**
(45) Veröffentlichungstag und Bekanntmachung des Hinweises auf die Patenterteilung: **13.08.2014**
(21) Anmeldenummer: 11700452.3
(22) Anmeldetag: 20.01.2011
(51) Int. Cl.: B01D 53/00, B01D 15/00, C01B 3/50, F25J 3/02

(54) **VERFAHREN ZUR ABTRENNUNG GEREINIGTEN WERTGASES AUS EINEM GASGEMISCH, SOWIE VORRICHTUNG ZUR DURCHFÜHRUNG DIESES VERFAHRENS**
METHOD FOR SEPARATING A CLEANED USEFUL GAS FROM A GAS MIXTURE, AND DEVICE FOR CARRYING OUT SAID METHOD
PROCÉDÉ POUR SÉPARER UN GAZ UTILE PURIFIÉ D'UN MÉLANGE GAZEUX ET DISPOSITIF PERMETTANT DE METTRE EN OEUVRE CE PROCÉDÉ

(30) Priorität: 28.01.2010 DE 102010006102
(43) Veröffentlichungstag der Anmeldung: 05.12.2012
(73) Patentinhaber: Siemens Aktiengesellschaft, 80333 München (DE)
(72) Erfinder: BALDAUF, Manfred, 91056 Erlangen (DE); GRAEBER, Carsten, 91056 Erlangen (DE); HANEBUTH, Marc, 90491 Nürnberg (DE); ZIMMERMANN, Gerhard, 91315 Höchstadt/Aisch (DE)
(86) Internationale Anmeldenummer: PCT/EP2011/050756
(87) Internationale Veröffentlichungsnummer: WO 2011/092106

(56) Entgegenhaltungen:
- WO-A1-2008/086812
- WO-A1-2009/132661
- WO-A1-2011/012470
- WO-A2-2010/107820
- US-A- 5 983 663
- US-A1- 2008 176 174

## Beschreibung

Die Erfindung betrifft ein Verfahren zur Abtrennung gereinigten Wertgases aus einem Gasgemisch im Wesentlichen enthaltend Kohlendioxid, wenigstens ein Wertgas sowie wenigstens einen Schadstoff.

Aufgrund des sogenannten Treibhauseffektes und des damit verbundenen globalen Temperaturanstiegs wird die Emission von treibhausaktiven Gasen in die Atmosphäre zunehmend kritisch beurteilt. Ein beträchtlicher Anteil des Treibhauseffektes wird dem Kohlendioxid (CO₂) zugeschrieben, das bei der Verbrennung fossiler Brennstoffe entsteht. Fossile Brennstoffe werden in großen Mengen beispielsweise in Kraftwerken oder Industrieanlagen verbrannt.

Um dem Treibhauseffekt entgegenzuwirken, soll in Zukunft Kohlendioxid soweit als möglich aus Kraftwerks- oder Industrieabgasen abgetrennt werden. Zu diesem Zweck werden intensive Entwicklungen betrieben, um Anlagen zu konzipieren, die möglichst wenig oder gar kein Kohlendioxid emittieren. Sämtliche Konzepte verfolgen das zentrale Ziel, das Kohlendioxid möglichst vollständig und in hoher Reinheit, wenn möglich mit geringem Energieaufwand, aus einem Gasstrom abzutrennen, so dass nach der Abtrennung letztlich kohlendioxidfreies Gas an die Umgebung abgegeben werden kann.

Neben dem abzutrennenden Kohlendioxid sind in einem zu behandelnden Gas jedoch häufig auch weitere unerwünschte Substanzen, also Schadstoffe enthalten, die je nach Art des verbrannten fossilen Brennstoffs auftreten und entfernt werden müssen. Als mengenmäßig am häufigsten vorkommend sind Schwefel, Quecksilber und deren Verbindungen zu nennen. D. h., dass nicht nur eine Kohlendioxidabtrennung, sondern auch eine Schadstoffabtrennung aus dem Gas erforderlich ist.

Bisher werden Schadstoffe im Abgas, das beispielsweise in Kohlekraftwerken anfällt, wie die besagten Schwefel- oder Quecksilberverbindungen, direkt aus der Gasphase abgeschieden. Beispielsweise erfolgt die Abtrennung von Schwefelwasserstoff mit Hilfe von Gaswäschen. Dabei wird der Gasstrom durch einen Absorber geleitet, in dem ein flüssiges Medium die Schadstoffe absorbiert. Flüssige Absorbermedien sind beispielsweise wässrige Alkanolaminlösungen, speziell wässriges Methyl-Diethanolamin, oder beispielsweise kaltes Methanol, eingesetzt beim Rectisol-Prozess. Nachteilig hierbei ist insbesondere jedoch, dass Verfahren zur Gaswäsche mit einem erhöhten Energiebedarf verbunden sind.

Eine effiziente Möglichkeit der Abtrennung von Kohlendioxid und Schadstoffen aus einem Gasgemisch ist in der nachveröffentlichten deutschen Patentanmeldung DE 10 2009 035 389.5 beschrieben. Gemäß diesem Verfahren wird aus dem Gasgemisch das Kohlendioxid kryogen auskondensiert, d. h., dass das Kohlendioxid als flüssige Phase aus dem Gasgemisch abgeschieden wird. Im Gasgemisch enthaltene Schadstoffe reichern sich dabei im flüssigen Kohlendioxid an. Das flüssige, schadstoffbeladene Kohlendioxid wird anschließend einer Adsorbereinrichtung zugeführt, in der die im flüssigen Kohlendioxid enthaltenen Schadstoffe adsorbiert und folglich aus dem flüssigen Kohlendioxid abgetrennt werden, das am Ausgang der Adsorbereinrichtung weitestgehend oder vollständig schadstofffrei vorliegt.

Das anfallende Wertgas ist aufgrund der kryogenen Abtrennung des Kohlendioxids CO₂-rein. Es hat sich nun aber herausgestellt, dass sich während des Kondensationsvorgangs nicht alle Schadstoffe in der flüssigen CO₂-Phase anreichern, sondern dass ein gewisser Restanteil an Schadstoffen nach wie vor im Wertgas enthalten ist.

Der Erfindung liegt damit das Problem zugrunde, ein Verfahren zur Abtrennung gereinigten Wertgases aus einem Gasgemisch anzugeben, das nicht nur weitestgehend CO₂-rein, sondern auch weitestgehend schadstoffrein ist.

Zur Lösung dieses Problems ist bei einem Verfahren zur Abtrennung gereinigten Wertgases aus einem Gasgemisch im Wesentlichen enthaltend Kohlendioxid, wenigstens ein Wertgas sowie wenigstens einen Schadstoff erfindungsgemäß vorgesehen, dass eine Kohlendioxidkondensation durchgeführt und das mit Schadstoff angereicherte flüssige Kohlendioxid vom Wertgas getrennt wird, wonach eine adsorptive Abtrennung des Schadstoffs aus dem flüssigen Kohlendioxid erfolgt und ein Teil des gereinigten flüssigen Kohlendioxids zur Absorption von noch im Wertgas enthaltenem Schadstoff dem Wertgas zugeführt wird.

Das erfindungsgemäße Verfahren sieht also ebenfalls eine kryogene Auskondensation des Kohlendioxids aus dem zu reinigenden Gasgemisch vor, wonach das schadstoffbeladene flüssige Kohlendioxid mittels einer Adsorptionseinrichtung vom enthaltenen Schadstoff gereinigt wird, so dass am Ende des Adsorptionsprozesses zumindest weitgehend schadstofffreies flüssiges Kohlendioxid vorliegt. Ein Teil dieses gereinigten flüssigen Kohlendioxids wird nun erfindungsgemäß zurückgeführt und erneut dem Wertgas zugeführt. Diese erneute Vermischung des Wertgases mit dem flüssigen Kohlendioxid führt nun vorteilhaft dazu, dass sich in dem flüssigen Kohlendioxid, das zu einem hohen Grad insbesondere aufgrund der Reinigung ungesättigt ist, der restliche im Wertgas enthaltene Schadstoff im Kohlendioxid anreichert. Das flüssige Kohlendioxid wird anschließend erneut der oder einer weiteren Adsorptionseinrichtung zugeführt, um diesem flüssigen Kohlendioxidanteil ebenfalls den im Rahmen der erneuten "Reaktion" mit dem Wertgas aufgenommenen Schadstoff zu entziehen.

D. h., dass das flüssige Kohlendioxid im Rahmen des erfindungsgemäßen Verfahrens zweimal als Absorbermedium für im Gasgemisch enthaltenen Schadstoff verwendet wird. Ein erstes Mal erfolgt die Schadstoffabsorption im Rahmen der Verflüssigung des Kohlendioxids, wenn dies also mit einer geeigneten Kohlendioxidkondensationseinrichtung in die flüssige Phase durch Abkühlung überführt wird. Ein zweites Mal wird das nach wie vor flüssige Kohlendioxid als Waschmittel im Rahmen der Rückführung des flüssigen Kohlendioxidanteils zum Wertgas verwendet, um den Schadstoffrestanteil aus dem Wertgas zu absorbieren. D. h., dass das zurückgeführte flüssige Kohlendioxid quasi als "flüssiges Gaswaschmittel" verwendet wird.

Letztlich liefert das erfindungsgemäße Verfahren folglich zwei getrennte, gereinigte Phasen, nämlich zum einen das kohlendioxid- und schadstofffreie Wertgas, zum anderen das schadstofffreie flüssige Kohlendioxid.

Eine besonders vorteilhafte Weiterbildung der Erfindung sieht vor, das flüssige zurückgeführte Kohlendioxid in das Wertgas einzuspritzen oder einzusprühen. Durch diese Zerstäubung wird die Oberfläche des flüssigen Kohlendioxids extrem vergrößert, so dass sich eine große Austauschoberfläche zwischen der Gasphase, also dem Wertgas, und der flüssigen Phase, also den flüssigen CO₂-Tröpfchen ergibt. Dies führt zu einer sehr hohen Absorptionsrate des restlichen, im Wertgas befindlichen Schadstoffs, der daraus resultierend nahezu vollständig absorbiert und entfernt werden kann. Eine besonders effiziente Arbeitsweise ergibt sich, wenn die Trennung des flüssigen schadstoffbeladenen Kohlendioxids und die zweite Schadstoffadsorption über das zurückgeführte, gereinigte flüssige Kohlendioxid in demselben Behälter, in dem die Phasentrennung und Schadstoffabsorption erfolgt, z. B. eine Kolonne, ein Flash-Behälter, oder Ähnliches erfolgt. D. h., dass in die Kolonne zum einen das auskondensierte, schadstoffbeladene Kohlendioxid nebst Wertgas eingebracht wird, wo die Phasentrennung, also die Trennung von Wertgas und flüssiger Kohlendioxid-Phase erfolgt, und dass zum anderen das zurückgeführte, gereinigte flüssige Kohlendioxid ebenfalls in die Kolonne vorzugsweise eingespritzt oder eingesprüht wird, um das Wertgas vollständig zu reinigen. Das zurückgeführte, flüssige Kohlendioxid wird sodann mit dem originär zugeführten, auskondensierten und schadstoffbeladenen Kohlendioxid abgezogen und nachfolgend einer gemeinsamen Adsorptionseinrichtung zur Schadstoffabtrennung zugeführt.

Das abgetrennte Wertgas kann ein beliebiges Wertgas sein, das abhängig vom verbrannten fossilen Brennstoff anfällt. Beispiele sind Wasserstoff, Kohlenmonoxid, Stickstoff, ein Edelgas oder eine Mischung aus den genannten Gasen.

Auch der anfallende Schadstoff kann unterschiedlicher Natur sein, je nach verwendetem fossilem Brennstoff. Häufig vorkommende Schadstoffe sind Schwefel, Quecksilber sowie deren Verbindungen oder Mischungen aus den genannten Stoffen.

Neben dem Verfahren betrifft die Erfindung ferner eine Vorrichtung zur Abtrennung gereinigten Wertgases aus einem Gasgemisch im Wesentlichen enthaltend Kohlendioxid, wenigstens ein Wertgas sowie wenigstens einen Schadstoff. Die erfindungemäße Vorrichtung umfasst wenigstens eine Kohlendioxidkondensationseinrichtung, wenigstens ein Behälter, in dem die Phasentrennung und Schadstoffabsorption erfolgt, z. B. eine Kolonne, ein Flash-Behälter, oder Ähnliches zur Abtrennung des Wertgases vom schadstoffbeladenen flüssigen Kohlendioxid, wenigstens eine Adsorptionseinrichtung zur Aufnahme des im abgetrennten flüssigen Kohlendioxid enthaltenen Schadstoffs, sowie eine Rückführleitung zum Zurückführen eines Teils des gereinigten flüssigen Kohlendioxids, vorzugsweise in die Kolonne, zur Aufnahme von restlichem im Wertgas enthaltenem Schadstoff. Eine solche Vorrichtung kann beispielsweise in einem Kraftwerk oder einer beliebigen Industrieanlage integriert und dort zur Gasreinigung verwendet werden. Der Kohlendioxidkondensationseinrichtung wird das gesamte anfallende Gasgemisch zugeführt, gegebenenfalls nach einer entsprechenden Vorbehandlung. In der Kohlendioxidkondensationseinrichtung erfolgt die CO₂-Kondensation. Das Gemisch aus Wertgas und flüssigem Kohlendioxid wird sodann einem für die Gas-Flüssig-Trennung geeignetem Behälter 4 zugeführt, in dem die Phasentrennung erfolgt. Das der Kolonne entzogene schadstoffbeladene flüssige Kohlendioxid wird sodann der Adsorptionseinrichtung zur adsorptiven Abtrennung des Schadstoffs zugeführt. Das von der Adsorptionseinrichtung abgezogene, gereinigte flüssige Kohlendioxid wird sodann zum Teil über eine Rückführleitung zurückgeführt und erneut in Kontakt mit dem bereits vom flüssigen Kohlendioxid getrennten Wertgas gebracht, um ihm die restlichen Schadstoffe zu entziehen. Die Rückführleitung kann dabei direkt in den Behälter geführt werden, d. h., dass das zurückgeführte Kohlendioxid erneut in den Behälter in den Bereich, in dem bereits das abgetrennte Wertgas vorliegt, eingebracht wird, wo die "Wertgaswaschung" mit dem als Absorptionsmittel wirkenden flüssigen Kohlendioxid erfolgt. Alternativ zur Rückführung in den Behälter besteht selbstverständlich die Möglichkeit, das gereinigte flüssige Kohlendioxid und das Wertgas in einem geeigneten "Reaktionsgefäß" außerhalb der Kolonne zusammenzuführen, um dort die Wertgaswaschung vorzunehmen. Die Betriebstemperatur der Vorrichtung liegt im Bereich zwischen -70°C bis -10°C, vorzugsweise zwischen -60°C bis -30°C.

In Weiterbildung der Erfindung ist eine Einspritz- oder Einsprühvorrichtung zum Einspritzen oder Einsprühen des flüssigen Kohlendioxids in das Behältnis oder den Reaktor, in dem die Schadstoffabsorption aus dem Wertgas erfolgt, also beispielsweise in der Kolonne selbst, vorgesehen. Über den Grad der Zerstäubung mit der Einspritz- oder Einsprüheinrichtung kann die Austauschoberfläche, also die Oberfläche der flüssigen CO₂-Phase, eingestellt respektive verändert werden, wobei eine große Austauschoberfläche für eine hocheffiziente Absorption der restlichen Schadstoffe zweckmäßig ist.

Sofern sich die Einspritz- oder Einsprühvorrichtung in dem Behälter selbst befindet, so ist sie zweckmäßigerweise unterhalb eines in der Kolonne angeordneten Demistors positioniert, durch den das Wertgas strömt, über den aber fluide Tröpfchen des flüssigen CO₂ zurückgehalten werden.

Die Adsorptionseinrichtung selbst ist bevorzugt ein Festbettadsorber, als Adsorbermedium (Adsorbens) wird beispielsweise Aktivkohle, Zeolith, Tonerde (Aluminiumoxid), ein Polymer mit großer Oberfläche oder dergleichen verwendet, wobei vorzugsweise ein solches Adsorbermedium zum Einsatz kommt, das sich sehr einfach regenerieren lässt. Dabei kann ein kontinuierlicher Betrieb insbesondere dann sichergestellt werden, wenn mehrere Adsorptionseinrichtungen vorgesehen sind, die wechselweise zwischen einem Adsorptionsbetrieb und einem Regenerationsbetrieb umschaltbar sind. Dies ermöglicht es, kontinuierlich einen Teil der Adsorptionseinrichtungen im Adsorptionsbetrieb zu betreiben, mithin also die CO₂-Reinigung kontinuierlich vorzunehmen, und den anderen Teil der Adsorptionseinrichtungen zu regenerieren. Bei Bedarf wird zwischen den beiden Betriebsarten umgeschaltet, so dass stets eine bestimmte Anzahl an Adsorptionseinrichtungen im Adsorptionsbetrieb betrieben werden.

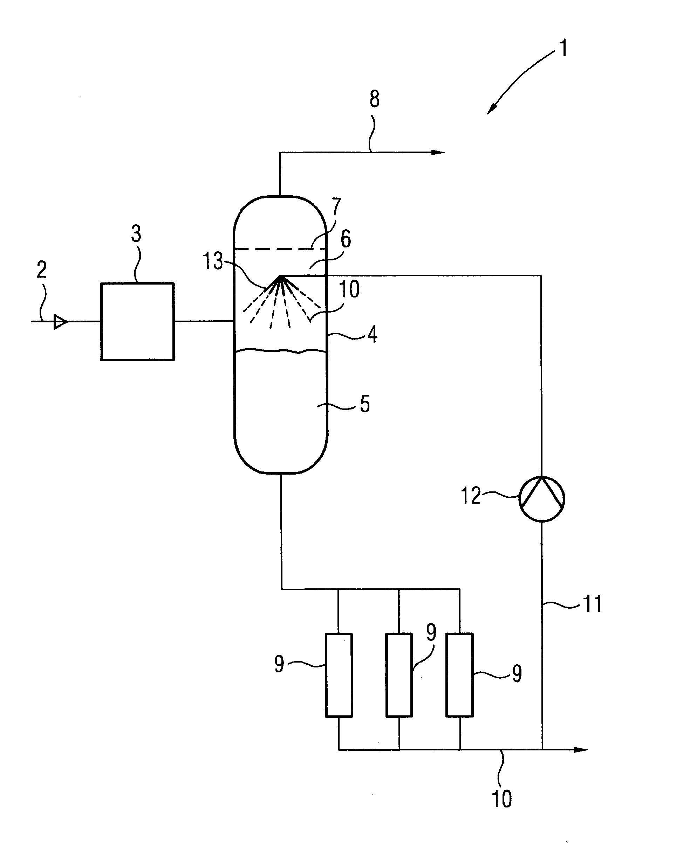

Weitere Vorteile, Merkmale und Einzelheiten der Erfindung ergeben sich aus dem im Folgenden beschriebenen Ausführungsbeispiel sowie anhand der Zeichnung.
Die Figur zeigt eine erfindungsgemäße Vorrichtung 1 zur Abtrennung eines gereinigten Wertgases aus einem Gasgemisch 2, das als Gasstrom, z. B. ein Abgasstrom, beispielsweise in einem Kraftwerk oder einer sonstigen Industrieanlage, in der fossile Brennstoffe eingesetzt werden, anfällt. Der Gasstrom 2 enthält als wesentlichen Gemischbestandteil Kohlendioxid, ferner wenigstens ein Wertgas wie beispielsweise Wasserstoff, sowie wenigstens einen Schadstoff beispielsweise auf Schwefel- oder Quecksilberbasis, beispielsweise Schwefelwasserstoff (H₂S) oder Carbonylsulfide (COS). Das Abgas 2 wird als Gasstrom zunächst einer Kohlendioxidkondensationseinrichtung 3 zugeführt, in der das Abgas 2 auf eine Temperatur abgekühlt wird, bei der es zu einer Kondensation des zuvor im Abgas gasförmig vorhandenen Kohlendioxids kommt. Dieses geht also in eine flüssige Phase über. Die ursprünglich im Abgas 2 enthaltenen Schadstoffe sind zum Großteil, jedoch nicht vollständig, in der flüssigen CO₂-Phase gelöst. Beide Phasen, also das noch mit Restschadstoff beladene Wertgas sowie das schadstoffbeladene, flüssige Kohlendioxid werden sodann in einen Behälter 4, z. B. eine Kolonne 4 gebracht, wo die Phasentrennung erfolgt. Im unteren Behälterbereich scheidet sich das schadstoffbeladene flüssige Kohlendioxid 5 ab, im oberen Kolonnenbereich respektiv oberhalb des CO₂-Spiegels befindet sich das Wertgas 6, das über einen Demistor 7, der der Rückhaltung fluider, noch im Gas befindlicher CO₂-Tröpfchen dient, als Wertgasstrom 8 abgezogen wird.

Wie beschrieben sammelt sich das flüssige Kohlendioxid 5 im unteren Kolonnenbereich an. Je nach Betriebstemperatur der erfindungsgemäßen Vorrichtung 1 respektive der Kohlendioxidkondensationseinrichtung 3 kann es sein, dass im flüssigen Kohlendioxid 5 auch festes Kohlendioxid in Partikelform vorliegt. Die Betriebstemperatur sollte jedoch so sein, dass es nicht zur Ausbildung einer dritten, festen Phase kommt, so dass ein etwaiges Zusetzen der nachfolgend noch beschriebenen Adsorptionseinrichtungen vermieden wird.

Das schadstoffangereicherte flüssige Kohlendioxid 5 wird abgezogen und wenigstens einer, im gezeigten Beispiel drei Adsorptionseinrichtungen 9 zugeführt, in denen die im flüssigen Kohlendioxid 5 enthaltenen Schadstoffe adsorptiv entfernt werden. Wie beschrieben kommt es bei der Kohlendioxidkondensation automatisch zu einer wesentlichen Anreicherungen der im Gasgemisch enthaltenen Schadstoffe in der flüssigen Kohlendioxidphase. Dies ermöglicht nun eine einfache adsorptive Abtrennung in den Adsorptionseinrichtungen 9. Bei den Adsorptionseinrichtungen 9 handelt es sich bevorzugt um Festbettadsorber, in die der flüssige Kohlendioxidstrom mit samt den Schadstoffen eingeleitet wird. Als Adsorbermedium kann beispielsweise Aktivkohle, Zeolith, Tonerde oder ein Polymer verwendet werden, je nach zu adsorbierendem Schadstoff oder Schadstoffmischungen.

Im gezeigten Beispiel sind drei Adsorbereinrichtungen 9 parallel geschaltet. Dies bietet die Möglichkeit, lediglich einen Teil, beispielsweise zwei Adsorptionseinrichtungen 9 gleichzeitig im Adsorptionsbetrieb zu betreiben, während die dritte Adsorptionseinrichtung 9 im Regenerationsbetrieb arbeitet, um das Adsorbermedium zu regenerieren, mithin also die an ihm adsorbierten Schadstoffe zu entfernen und das Adsorbermedium wieder zu entsättigen. Hierzu sind in an sich bekannter, jedoch nicht näher gezeigter Weise entsprechende Leitungen und Ventile vorgesehen, die einen Umschaltbetrieb ermöglichen.

Von den Adsorptionseinrichtungen 9 wird sodann gereinigtes flüssiges Kohlendioxid 10 abgezogen, das also keinen oder nahezu keinen Schadstoff mehr enthält.

Ein Teil des gereinigten flüssigen Kohlendioxids wird nun über eine Rückführleitung 11 mittels einer Pumpe 12 erneut in die Kolonne 4 gefördert und dort mittels einer Einspritzoder Einsprüheinrichtung 13 möglichst fein zerstäubt. Die Einspritz- oder Einsprüheinrichtung 13 befindet sich in einem Bereich knapp unterhalb des Demistors 7, also im Kolonnenbereich, in dem das Wertgas 6 vorliegt. Durch das Einspritzen oder Einsprühen des gereinigten Kohlendioxids 10 kommt es zu einer weiteren Absorptionsreaktion zwischen dem Wertgas 6 respektive den in ihm vorliegenden Schadstoffen und den feinen CO₂-Tröpfchen, diese absorbieren also den Restschadstoff. Das durch den Demistor 7 strömende und anschließend abgezogene gereinigte Wertgas 6 ist damit nicht nur kohlendioxidfrei, sondern auch schadstofffrei. Das eingesprühte Kohlendioxid 10, das nunmehr ebenfalls bzw. erneut schadstoffbeladen ist, wird sodann mit dem originär zugeführten, im unteren Kolonnenbereich befindlichen verflüssigten Kohlendioxid 5 abgezogen und erneut den Adsorptionseinrichtungen 9 zugeführt.

Der nicht über die Rückführleitung 11 abgezogene Anteil an gereinigtem Kohlendioxid 10 wird einer geeigneten Nachverarbeitung beliebiger Art zugeführt.

Wie beschrieben sollte die Verfahrenstemperatur höchstens -30°C betragen, sie sollte -60°C nicht unterschreiten, um eine Verfestigung des Kohlendioxids zu vermeiden. Der Verfahrensdruck muss grundsätzlich oberhalb des Trippelpunktes von Kohlendioxid entsprechend dem Temperatur-Druck-Diagramm liegen. Er beträgt damit mindestens 5 bar. Selbstverständlich sind die entsprechenden Betriebsparameter und verwendeten Adsorbermedien in Abhängigkeit der vorhandenen Gasgemischbestandteile respektive Schadstoffe zu verwenden.

## Patentansprüche

1. Verfahren zur Abtrennung gereinigten Wertgases aus einem Gasgemisch im Wesentlichen enthaltend Kohlendioxid, wenigstens ein Wertgas sowie wenigstens einen Schadstoff, wobei eine Kohlendioxidkondensation durchgeführt und das mit Schadstoff angereicherte flüssige Kohlendioxid vom Wertgas getrennt wird, wonach eine adsorptive Abtrennung des Schadstoffs aus dem flüssigen Kohlendioxid erfolgt und ein Teil des gereinigten flüssigen Kohlendioxids zur Absorption von noch im Wertgas enthaltenem Schadstoff dem Wertgas zugeführt wird.

2. Verfahren nach Anspruch 1, **dadurch gekennzeichnet, dass** das flüssige Kohlendioxid in das Wertgas eingespritzt oder eingesprüht wird.

3. Verfahren nach Anspruch 1 oder 2, **dadurch gekennzeichnet, dass** die Trennung des flüssigen schadstoffbeladenen Kohlendioxids vom Wertgas in einem Behälter erfolgt, in die auch das gereinigte flüssige Kohlendioxid zugeführt wird.

4. Verfahren nach einem der vorangehenden Ansprüche, **dadurch gekennzeichnet, dass** als Wertgas Wasserstoff, Kohlenmonoxid, Stickstoff, Edelgas oder eine Mischung daraus abgetrennt wird.

5. Verfahren nach einem der vorangehenden Ansprüche, **dadurch gekennzeichnet, dass** als Schadstoff Schwefel, Quecksilber, deren Verbindungen oder Mischungen daraus abgetrennt werden.

6. Vorrichtung zur Abtrennung gereinigten Wertgases aus einem Gasgemisch im wesentlichen enthaltend Kohlendioxid, wenigstens ein Wertgas sowie wenigstens einen Schadstoff, umfassend wenigstens eine Kohlendioxidkondensationseinrichtung (3), wenigstens einen Behälter (4) zur Abtrennung des Wertgases (6, 8) vom schadstoffbeladenen flüssigen Kohlendioxid (5), wenigstens eine Adsorptionseinrichtung (9) zur Aufnahme des im abgetrennten flüssigen Kohlendioxid (5) enthaltenen Schadstoffs, sowie eine Rückführleitung (11) zum Zurückführen eines Teils des gereinigten flüssigen Kohlendioxids (10) vorzugsweise in den Behälter (4) zur Aufnahme von restlichem im Wertgas (6) enthaltenem Schadstoff.

7. Vorrichtung nach Anspruch 6, **dadurch gekennzeichnet, dass** vorzugsweise in dem Behälter (4) eine Einspritz- oder Einsprüheinrichtung (13) zum Einspritzen oder Einsprühen des flüssigen Kohlendioxids (10) vorgesehen ist.

8. Vorrichtung nach Anspruch 7, **dadurch gekennzeichnet, dass** die Einspritz- oder Einsprüheinrichtung (13) unterhalb eines in dem Behälter (4) angeordneten Demistors (7) vorgesehen ist.

9. Vorrichtung nach einem der Ansprüche 6 bis 8, **dadurch gekennzeichnet, dass** der Behälter (4) zur Trennung der Gas- und Flüssigphasen eine Kolonne oder ein Flash-Behälter ist.

10. Vorrichtung nach einem der Ansprüche 6 bis 9, **dadurch gekennzeichnet, dass** die Adsorptionseinrichtung (9) ein Festbettadsorber ist.

11. Vorrichtung nach einem der Ansprüche 6 bis 10, **dadurch gekennzeichnet, dass** mehrere Adsorptionseinrichtungen (9) vorgesehen sind, die wechselweise zwischen einem Adsorptionsbetrieb und einem Regenerationsbetrieb umschaltbar sind.

## Claims

1. Method for separating cleaned useful gas from a gas mixture substantially containing carbon dioxide, at least one useful gas, and at least one harmful substance, with carbon-dioxide condensing being carried out and the liquid carbon dioxide containing an accumulation of harmful substances being separated from the useful gas, after which the harmful substances are separated from the liquid carbon dioxide by adsorption and a part of the cleaned liquid carbon dioxide is fed to the useful gas for absorbing harmful substances still contained in the useful gas.

2. Method according to claim 1, **characterised in that** the liquid carbon dioxide is injected or sprayed into the useful gas.

3. Method according to claim 1 or 2, **characterised in that** the liquid carbon dioxide laden with harmful substances is separated from the useful gas in a container into which the cleaned liquid carbon dioxide is also fed.

4. Method according to one of the preceding claims, **characterised in that** hydrogen, carbon monoxide, nitrogen, an inert gas, or a mixture thereof is separated as the useful gas.

5. Method according to one of the preceding claims, **characterised in that** sulphur, mercury, their compounds, or mixtures thereof are separated as harmful substances.

6. Device for separating cleaned useful gas from a gas mixture substantially containing carbon dioxide, at least one useful gas, and at least one harmful substance, comprising at least one carbon-dioxide-condensing device (3), at least one container (4) for separating the useful gas (6, 8) from the liquid carbon dioxide (5) laden with harmful substances, at least one adsorption device (9) for taking up the harmful substances contained in the separated liquid carbon dioxide (5), and a feedback line (11) for feeding back a part of the cleaned liquid carbon dioxide (10), preferably into the container (4), for taking up residual harmful substances contained in the useful gas (6).

7. Device according to claim 6, **characterised in that** an injecting or spraying device (13) for injecting or spraying the liquid carbon dioxide (10) is contained preferably in the container (4).

8. Device according to claim 7, **characterised in that** the injecting or spraying device (13) is provided underneath a demister (7) that is located in the container (4).

9. Device according to one of claims 6 to 8, **characterised in that** the container (4) for separating the gaseous and liquid phases is a column or flash container.

10. Device according to one of claims 6 to 9, **characterised in that** the adsorption device (9) is a stationary bed adsorber.

11. Device according to one of claims 6 to 10, **characterised in that** a plurality of adsorption devices (9) have been provided that can be switched over in turns between an adsorption mode and a regeneration mode.

## Revendications

1. Procédé de séparation de gaz épuré ayant de la valeur d'un mélange gazeux contenant essentiellement du dioxyde de carbone, au moins un gaz ayant de la valeur, ainsi qu'au moins une substance polluante, en effectuant une condensation du dioxyde de carbone et en séparant du gaz ayant de la valeur du dioxyde de carbone liquide enrichi en substance polluante, en séparant ensuite, par adsorption, la substance polluante du dioxyde de carbone liquide et en envoyant, au gaz ayant de la valeur, une partie du dioxyde de carbone liquide épuré pour l'absorption de substance polluante encore présente dans le gaz ayant de la valeur.

2. Procédé suivant la revendication 1, **caractérisé en ce que** l'on projette ou l'on pulvérise le dioxyde de carbone liquide dans le gaz ayant de la valeur.

3. Procédé suivant la revendication 1 ou 2, **caractérisé en ce que** l'on sépare l'oxyde de carbone liquide et chargé de substance polluante du gaz ayant de la valeur dans un récipient (4) dans lequel on envoie aussi le dioxyde de carbone liquide épuré.

4. Procédé suivant l'une des revendications précédentes, **caractérisé en ce que** l'on sépare, comme gaz ayant de la valeur, de l'hydrogène, du monoxyde de carbone, de l'azote, un gaz rare ou l'un de leurs mélanges.

5. Procédé suivant l'une des revendications précédentes, **caractérisé en ce que** l'on sépare, comme substance polluante, du souffre, du mercure, leurs composés ou leurs mélanges.

6. Installation de séparation de gaz épuré ayant de la valeur d'un mélange gazeux contenant essentiellement du dioxyde de carbone, au moins un gaz ayant de la valeur, ainsi qu'au moins une substance polluante, comprenant au moins un dispositif (3) de condensation du dioxyde de carbone, au moins un récipient (4) de séparation du gaz (6, 8) ayant de la valeur du dioxyde (5) de carbone liquide et chargé de substance polluante, au moins un dispositif (9) d'adsorption pour l'absorption de la substance polluante contenue dans le dioxyde (5) de carbone liquide séparé ainsi qu'un conduit (11) de retour pour retourner une partie du dioxyde (10) de carbone liquide épuré de préférence dans le récipient (4) pour l'absorption du reste de la substance polluante contenue dans le gaz (6) ayant de la valeur.

7. Installation suivant la revendication 6, **caractérisée en ce qu'**il est prévu, de préférence dans le récipient (4), un dispositif (13) de projection ou de pulvérisation pour projeter ou pour pulvériser le dioxyde de carbone (10) liquide.

8. Installation suivant la revendication 7, **caractérisée en ce que** le dispositif (13) de projection ou de pulvérisation est prévu en dessous d'un dispositif (7) antibuée disposé dans le récipient (4).

9. Installation suivant l'une des revendications 6 à 8, **caractérisée en ce que** le récipient (4) de séparation des phases gazeuse et liquide est une colonne ou un récipient flash.

10. Installation suivant l'une des revendications 6 à 9, **caractérisée en ce que** le dispositif (9) d'adsorption est un adsorbeur en lit fixe.

11. Installation suivant l'une des revendications 6 à 10, **caractérisée en ce qu'**il est prévu plusieurs dispositifs (9) d'adsorption, qui peuvent passer en alternance entre un fonctionnement en adsorption et en fonctionnement en régénération.
